# EUROPEAN PATENT APPLICATION

(11) **EP 4 580 159 A1**
(43) Date of publication of application: **02.07.2025**
(21) Application number: 24221491.4
(22) Date of filing: 19.12.2024
(51) Int. Cl.: H04L 47/283, H04L 47/56, H04L 47/263

(54) **STRICT DETERMINISTIC SCHEDULING COORDINATION**

(30) Priority: 28.12.2023 US 202318398654
(71) Applicant: Nokia Technologies Oy, 02610 Espoo (FI)
(72) Inventor: Leclerc, Brice, 91290 Arpajon (FR); Marce, Olivier, 91120 Palaiseau (FR)
(74) Representative: Bryers Intellectual Property Ltd

(57) **Abstract**

A receiver includes at least one processor and memory storing computer-executable instructions and coupled to the at least one processor. The at least one processor is configured to execute the computer-executable instructions to cause the receiver to receive a setup transmission from an emitter via a communications link connecting the emitter and the receiver; determine a current variance between a scheduled receive time and a time at which the setup transmission was received; and transmit a control message to the emitter, wherein the control message indicates whether the current variance is acceptable.

## Description

### FIELD

The present disclosure relates to scheduling communications between network elements, and more particularly to strict deterministic scheduling coordination.

### BACKGROUND

Communication networks commonly use various packet switching protocols for data transmission over communication links connecting network nodes. Latency between the time a data packet is transmitted from a first node and the time that same data packet is received at a second node may be an important consideration in network design.

### SUMMARY

The scope of protection sought for various example embodiments is set out by the independent claims. The example embodiments and/or features, if any, described in this specification that do not fall under the scope of the independent claims are to be interpreted as examples useful for understanding various embodiments.

In various example embodiments, a receiver includes at least one processor and memory, which is coupled to the at least one processor and stores computer-executable instructions. The at least one processor is configured to execute the computer-executable instructions to cause the receiver to receive a setup transmission from an emitter via a communications link connecting the emitter and the receiver, determine a current variance between a scheduled receive time and a time at which the setup transmission was received, and transmit a control message to the emitter, wherein the control message indicates whether the current variance is acceptable.

In an example embodiment, the at least one processor is further configured to execute the computer-executable instructions to cause the receiver to determine that the current variance is acceptable in response to the scheduled receive time and the time at which the setup transmission was received varying by less than a threshold number of clock cycles.

In another example embodiment, the at least one processor is further configured to execute the computer-executable instructions to cause the receiver to receive operational data from the emitter during a period when the communication link is active, monitor an operational variance indicating a difference between a first time at which the receiver expected to receive the operational data, and a second time at which the receiver received the operational data, and transmit a second control message to the emitter, wherein the second control message indicates a transmission offset to be applied by the emitter.

In any or all of the above example embodiments, the setup transmission includes a probe transmitted in accordance with a communication schedule shared by the emitter and the receiver.

In any or all of the above example embodiments, the at least one processor is further configured to execute the computer-executable instructions to cause the receiver to generate a dedicated control message including variance information, or insert variance information into a non-dedicated signal.

In various example embodiments, the receiver includes an optical line card configured to communicate with the emitter via an optical communications link.

In another example embodiment, an emitter includes at least one processor and memory, which is coupled to the at least one processor and stores computer-executable instructions. The at least one processor is configured to execute the computer-executable instructions to cause the emitter to perform an initial coordination with a receiver, which can be implemented in accordance with any or all of the embodiments discussed above. As part of the initial coordination, the at least one processor may be further configured to execute the computer-executable instructions to cause the emitter to determine a first transmission offset, apply the first transmission offset to operational data transmitted from the emitter to the receiver via a communications link connecting the emitter and the receiver; and monitor the communications link.

In various example embodiments, as part of monitoring the communications link, the at least one processor is further configured to execute the computer-executable instructions to cause the emitter to receive an adjustment control message from the receiver indicating a current variance between a first time at which the receiver expected to receive data transmitted by the emitter and a second time at which the receiver received the data transmitted by the emitter, and apply a first adjusted transmission offset, determined based on the adjustment control message, to subsequently transmitted operational data.

In various example embodiments, as part of the initial coordination, the at least one processor is further configured to execute the computer-executable instructions to cause the emitter to iteratively perform the following until a message is received from the receiver indicating that the communications link is ready for transmission of operational data: transmit a setup probe to the receiver via the communications link; receive a setup control message from the receiver indicating a setup variance between a third time at which the receiver expected to receive the setup probe, and a fourth time at which the receiver received the setup probe; and adjust the first transmission offset based on the setup variance.

In any or all of the example embodiments discussed herein, the setup probe is transmitted in accordance with a communication schedule shared by the emitter and the receiver.

According to some example embodiments, the at least one processor is configured to execute the computer-executable instructions to cause the emitter to generate the first adjusted transmission offset by updating the first transmission offset by a number of clock cycles indicated by the adjustment control message.

In any or all example embodiments, the adjustment control message includes one of a dedicated signal generated specifically to transfer variance information, or a non-dedicated signal including the variance information. In further example embodiments, the emitter includes an optical line card configured to communicate with the receiver via an optical communications link.

In yet a further example embodiment, a communication system includes an emitter, which further includes at least a first processor and a first memory storing first computer-executable instructions, and a receiver, which further includes at least a second processor and a second memory storing second computer-executable instructions. The receiver is coupled to the emitter via a deterministic-compliant communications link. In the example embodiment, the communication system also includes a controller, which further includes at least a third processor and a third memory storing third computer-executable instructions. The controller is coupled to the emitter and the receiver, and the at least a third processor is configured to execute the third computer-executable instructions to cause the controller to transmit a communication schedule to the emitter and the receiver, wherein the communication schedule designates periods for communication between the emitter and the receiver via the deterministic-compliant communications link. The at least a first and second processor are configured to execute the first and second computer-executable instructions to cause the emitter and the receiver to coordinate with each other to establish a transmission offset to the communication schedule, and to cause the emitter to transmit operational data based on the communication schedule and the transmission offset.

In various example embodiments, the at least a first processor is further configured to execute the first computer-executable instructions to cause the emitter to transmit a probe from the emitter to the receiver via the deterministic-compliant communications link, wherein the probe is transmitted at a beginning of a period for communication between the emitter and the receiver.

In further example embodiments, the at least a second processor is further configured to execute the second computer-executable instructions to cause the receiver to receive the probe from the emitter, determine a current variance between a scheduled receive time and a time at which the probe was received. The receiver may transmit a control message to the emitter via the deterministic-compliant communications link, or any other link, wherein the control message indicates whether the current variance is acceptable. Note that in various embodiments, the control message can be transmitted over the same physical link used to implement the deterministic-compliant link, but using a different logical link.

In one or more of example embodiments discussed herein, the at least a first processor is further configured to execute the first computer-executable instructions to cause the emitter to receive the control message, and in response to determining that the control message indicates that the current variance is acceptable, transmit operational data to the receiver via the deterministic-compliant communications link.

In yet further example embodiments, the at least a second processor is further configured to execute the second computer-executable instructions to cause the receiver to monitor an operational variance indicating a difference between a first time at which the receiver expected to receive the operational data, and a second time at which the receiver received the operational data. The receiver may transmit a second control message to the emitter via the deterministic-compliant communications link, or any other link, wherein the second control message indicates an updated transmission offset to be applied by the emitter. Note that in various embodiments, the second control message can be transmitted over the same physical link used to implement the deterministic-compliant link, but using a different logical link.

In various example embodiments, the at least a second processor is optionally further configured to execute the second computer-executable instructions to cause the receiver to transmit information indicating the operational variance to the controller, and the at least a third processor is configured to execute the third computer-executable instructions to cause the controller to transmit an updated communication schedule to the emitter and the receiver, wherein the updated communication schedule is based on the information indicating the operational variance.

In any or all of the example embodiments, the deterministic-compliant communications link includes an optical communications link.

### BRIEF DESCRIPTION OF THE DRAWINGS

Example embodiments will become more fully understood from the detailed description given herein below and the accompanying drawings, wherein like elements are represented by like reference numerals. The example embodiments are given by way of illustration only, and thus are not limiting of this disclosure.
FIG. 1 is a block diagram illustrating example embodiments of a network.
FIG. 2 is a flowchart illustrating an example embodiment of a method.
FIG. 3 is a signal flow diagram illustrating example embodiments of an initial coordination phase of strict deterministic scheduling coordination.
FIG. 4 is a signal flow diagram illustrating example embodiments of a continuous monitoring phase of a strict deterministic scheduling coordination.
FIG. 5 is a block diagram illustrating an example embodiment of a processing device configurable to implement example embodiments of an SDN controller as disclosed herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Example embodiments will now be described more fully with reference to the accompanying drawings.

To face critical communication needs in term of latency, the IEEE Time-Sensitive Networking (TSN) Task Group has developed a new set of IEEE 802.1 Ethernet standards. These standards enable determination of an upper bound to contention latency. But even employing these new standards, frames may still be delayed in a contention buffer if the egress port is not free when the frame needs to be sent out.

In various example embodiments, using Strict Deterministic Scheduling reduces or eliminates contention and/or contention latency. Strict Deterministic Scheduling, as discussed herein, may take advantage of knowledge about temporal patterns of communication flows. In various example embodiments, a scheduling algorithm computes the dates of frame departures and arrivals at nodes in the network. A switch forwards frames of flows organized according to this algorithm without introducing contention latency. The switching process is based on expected frames arrival dates. As used herein the term "date" is not intended to refer to a general calendar date, but instead refers to a particular time. The particular time may, but need not include a calendar date. The various example embodiments discussed herein provide a shared packet network with a fully deterministic networking function that may be applied in fields including, but not limited to, Industry 4.0, or Cloud RAN, while supporting stochastic communication flows.

Various techniques and devices according to example embodiments may reduce or prevent contention and/or buffering, because the flow of packets is managed in such a way that the output port of a packet switch is free at the time a frame to be transmitted by the switch is received. Various example embodiments can achieve this result by causing the emitter of a frame to send the frame at precisely the right time, e.g., within the correct clock cycle.

In various example embodiments employing strict deterministic scheduling control, there is no need for the emitter and the receiver to employ a common clock. By using strict deterministic scheduling control, the extra traffic needed to synchronize clocks and/or the processing overhead associated with synchronizing clocks, may be avoided in some example embodiments.

Additionally, strict deterministic scheduling control may provide better accuracy than conventional implementations, *e.g*., down to nanosecond accuracy for 10 Gbps transmissions. In some example embodiments, even greater accuracy improvement can be achieved for 100 Gbps transmissions. In general, the lower accuracy of various conventional techniques tends to result in longer guard times, which may result in a reduction in usable bandwidth. Furthermore, as those of ordinary skill in the art will note, guard times of flows are accumulated when a switch multiplexes the flows together. Furthermore, in some embodiments, sharing a common date may not be enough, because the distance between the emitter and the switch is not null, and time spent by a frame on the transmission link between the emitter and the switch may not be negligible.

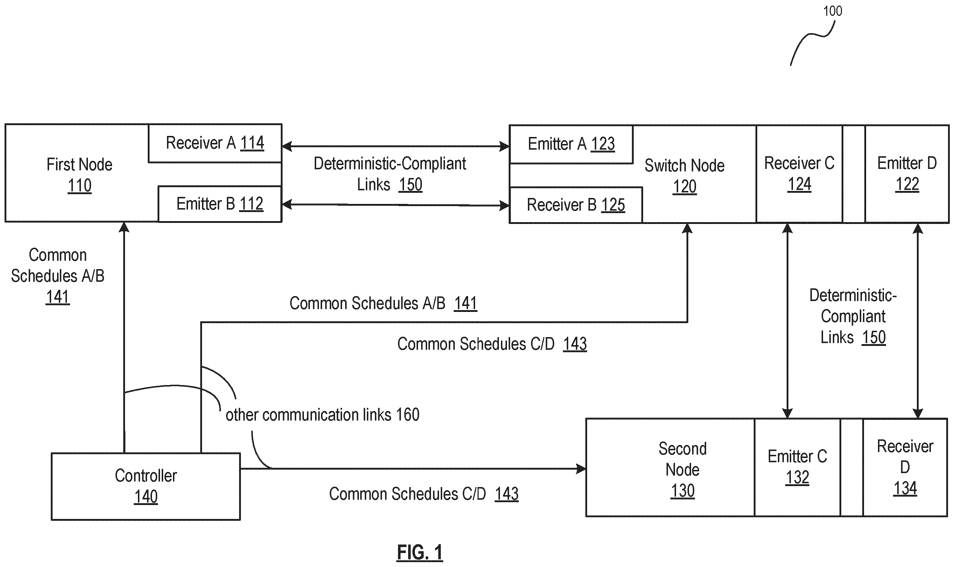

Referring first to FIG. 1, an example embodiment of a network employing strict deterministic scheduling coordination will be discussed. Network 100 includes first node 110, switch node 120, second node 130, and controller 140. As illustrated, first node 100 includes receiver A 114 and emitter B 112; second node 130 includes emitter C 132 and receiver D 134; switch node 120 includes emitter A 123, receiver B 125, receiver C 124, and emitter D 122. In various example embodiments, first node 110, second node 130, and/or switch node 120 may be implemented as a full photonic switch with native optical switching

Each emitter has a counterpart receiver in a different node. For example, Receiver A 114 in first node 110 has a counterpart emitter A 123 in switch node 120. Similarly, emitter C 132 has a corresponding receiver C in switch node 120, and so on. Each receiver and its counterpart emitter are connected via one of the deterministic-compliant links 150. Deterministic compliant links 150 may be implemented using logical links or physical links. For example, in an optical communication system deterministic-compliant links 150 may be implemented using particular frequencies transmitted on physical medium along with non-deterministic compliant links implemented using that same physical medium. In at least one embodiment, however, the term deterministic-compliant links refers to the transmission medium.

Controller 140 is coupled to first node 110, switch node 120, and second node 130 via one or more other communication links 160, and transmits common schedules A/B 141, and C/D 143 to first node 110, switch node 120, and second node 130, as appropriate. For example, communications between emitter B 112 and corresponding receiver B 125 may be conducted according to a different schedule than communications between emitter A 123 and corresponding receiver A 114. Likewise, communications between emitter C 132 and corresponding receiver C 124 may be conducted according to a different schedule than communications between emitter D 122 and corresponding receiver D 134.

In at least some example embodiments, schedules A/B 141, and C/D 143 are coordinated with each other, so that packets transmitted from first node 110 to second node 130 will be received and transmitted by switch node 120 without any need for buffering of the transmissions at switch node 120. In some example embodiments, a single schedule can be sent to all three of first node 110, second node 130 and switch node 120.

In various example embodiments, other communication links 160 are different from deterministic-compliant links 150, and may, but need not, be dedicated control links implemented via a physical medium separate from deterministic-compliant links 150. In other implementations, other communication links 160 may share the same physical medium used by deterministic-compliant links 150.

Although each of the illustrated nodes includes both an emitter and a receiver, and in the case of switch node 120 two emitters and two receivers, various example embodiments are not so limited.

The following example embodiments will be discussed with regard to an emitter, receiver, controller, node, etc. It should be understood that the emitter, receiver, controller, node, etc. may refer to one or more of the emitters, receivers, controllers, nodes, etc. shown in FIG. 1. However, example embodiments should not be limited to this example.

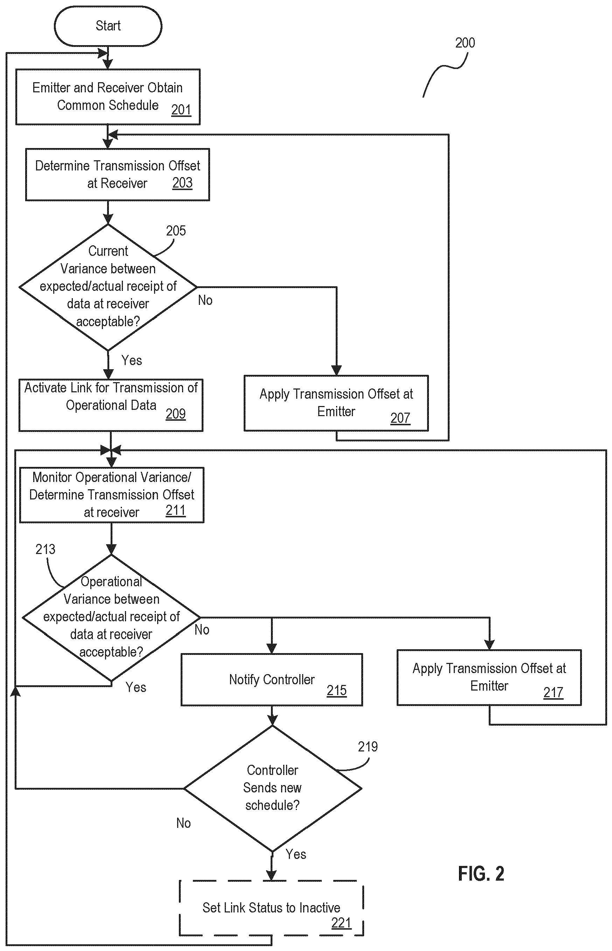

FIG. 2 is a flowchart illustrating an example embodiment of a method. In various example embodiments, strict deterministic scheduling coordination is performed in two phases: (1) an initial coordination phase; and (2) a continuous monitoring phase.

In an example embodiment, the initial coordination phase is used to coordinate the periodic scheduling of the emitter with the periodic scheduling of the switch. In some such example embodiments, the initial coordination phase is performed at the time the link between the emitter and the switch is established. At the conclusion of the initial coordination phase, the operational service (*i*.*e*., a strict deterministic network link) between the emitter and the switch is opened/activated for transmitting operational data.

During the second phase, sometimes referred to as the continuous monitoring phase, the relative drift between a clock of the emitter and a clock of the switch is monitored and operational transmissions by the emitter are adjusted accordingly. It will be appreciated that in at least some example embodiments, no clock synchronization between the emitter and the receiver is performed. In at least one embodiment, monitoring is continuously performed while the service/link is open.

Consider the following example embodiment illustrated by method 200. As illustrated by block 201 an emitter and a receiver obtain a common schedule, sometimes referred to herein as a shared communication schedule. The common schedule may specify scheduled receive times for the receiver, and scheduled transmit times for the emitter. In some example embodiments, the common schedule may specify one or more windows during which communications between the emitter and receiver are to be conducted via a deterministic-compliant link, and the emitter is constrained to transmit only during one of the specified windows. The common schedule may specify that the one or more windows open periodically in some example embodiments. The common schedule may, in some example embodiments, specify a window start and duration, a time between windows, specific window open and close times, and/or other information that instructs the emitter when transmissions are permitted, and notifies the receiver when transmissions from the emitter are expected to arrive.

As illustrated by block 203, a receiver determines a transmission offset based on differences between expected transmission arrival times and actual transmission arrival times. In some example embodiments, an expected arrival time of packets at the receiver, as indicated by the common schedule, may take into account an estimated latency associated with the deterministic-compliant communication link. In other example embodiments, the expected arrival time may assume an ideal transmission line. In either case, strict deterministic scheduling coordination can be used to adjust for any variance between actual arrival times expected arrival times.

In at least one example embodiment, an initial coordination phase may begin with the emitter transmitting a defined and/or predefined frame, sometimes referred to as a probe, at or near the beginning of a scheduled opening of a communication window on the deterministic-compliant link. The schedule may specify periodic transmission and receipt of probes during the initial coordination phase. In some example embodiments, an expected receive time of the probe at the receiver is based on a scheduled transmission by the emitter. Any difference between the date at which the transmission is actually received, and the date at which the transmission is scheduled to be received, sometimes referred to herein as a variance, may be used by the receiver to determine a transmission offset to be applied at the emitter.

As illustrated by block 205, the receiver checks to see if the current variance between expected/actual receipt of data is acceptable. The term "current variance" refers to a most recent variance between the receiver's expected and actual receipt of a transmission from the emitter via the deterministic-compliant link connecting the receiver and the emitter. In an example embodiment, an "acceptable variance" refers to a difference of less than one clock cycle, or a time equivalent to less than one clock cycle, between the expected and actual receipt of the probe or other transmission from the emitter.

In various example embodiments, in response to receipt of each probe or other transmission, the receiver determines a current variance, determines a transmission offset based on that variance, and sends a control message/signal to inform the emitter that the probe or other transmission arrived too early or too late relative to the date indicated by the common schedule. In implementations where the variance is measured in clock cycles, the transmission offset may be the same or substantially the same as the variance.

As illustrated by block 207, in response to receiving the control message from the receiver, which indicates the transmission offset, the emitter applies the transmission offset to shift its periodic scheduling according to the control message. In an example embodiment, blocks 203, 205, and 207 are repeated until block 205 indicates that the arrival of the frames complies with the common schedule (the variance is acceptable).

As illustrated by block 205 and block 209, once the current variance between the expected arrival time of frames transmitted by the emitter and the actual arrival time of those frames is acceptable, the deterministic-compliant communication link is opened/activated for use in transmitting operational data, and the initial coordination phase may be considered complete. In at least one example embodiment, a variance of less than one clock cycle is considered acceptable. Various example embodiments, however, are not limited to using one clock cycle as the threshold for determining when a communication link is to be activated/opened.

In various example embodiments, opening/activating a communication link for use in transmitting operational data includes stopping initial coordination between a receiver and an emitter to establish an initial transmission offset, and beginning to transmit operational data using that initial offset. In at least one embodiment, the link may be opened/activated in response to a message transmitted from the receiver to the emitter. For example, in response to the receiver determining a current variance between the expected arrival time of frames transmitted by the emitter and an actual arrival time of those frames is acceptable, the receiver may transmit a message to the emitter indicating that the variance is acceptable. In response to receiving that message, the emitter may know that it can begin transmitting operational data to receiver. In other embodiments, the receiver may send a message to the emitter explicitly indicating that the link is open/activated. In various example embodiments, the term "operational data" refers to data including content that is not purely for purposes of establishing a transmission offset. In at least one example embodiment, prior to opening/activating the link, the emitter does not send operational data over the link.

As illustrated by block 211, during the period of time when the emitter is transmitting operational data to the receiver, an operational variance may be monitored by the receiver, which uses the operational variance to determine a transmission offset.

As illustrated by block 213, the receiver determines whether an operational variance between expected/actual receipt of data at the receiver is acceptable. If the operational variance is determined to be unacceptable, for example because the operational variance exceeds a threshold value, method 200 may proceed in parallel as indicated by blocks 215 and 217.

As illustrated by block 215, in example embodiments where a controller is used to provide the common schedule used by the receiver and the emitter, the receiver may send a notification to a controller indicating the operational variance between expected and actual arrival of operational data at the receiver, the transmission offset determined by the receiver, and/or other information relevant to schedule generation by the controller.

As illustrated by block 217, the receiver transmits a control message to the emitter indicating the transmission offset to be used by the emitter, and the emitter applies the transmission offset to transmission of operational data frames, packets, and/or the like. In at least one example embodiment, as illustrated by blocks 211, 213, and 217, monitoring and adjustment of transmissions is performed continually during a time the deterministic-compliant link is open/active.

As illustrated by block 219, the controller may determine whether a new common schedule is to be delivered to the receiver and the emitter. The new common schedule may include an updated common schedule, or may include particular changes to be applied to a previously transmitted common schedule. This decision may be based on whether the variance and/or transmission offset exceed a threshold, how often a new transmission offset is being applied, how long it has been since a previous common schedule has been sent, based on the notification from the receiver, based on an inability to coordinate the receiver and the emitter, and/or some other suitable criterion.

If the controller determines that a new/updated common schedule is to be delivered, then as illustrated by block 221, the controller may optionally deactivate the link for use in transmitting operational data, and return to block 201 at which the controller transmits a new/updated shared schedule to the emitter and receiver. In other example embodiments, the controller may allow the receiver and the emitter to continue to attempt coordination until the current communication window is closed, and transmit a new/updated shared schedule to the emitter and receiver, as illustrated by block 201, for use during subsequent communication windows. In some example embodiments, the controller may periodically send a new/updated common schedule.

Returning to block 219, if the controller determines that a new/updated common schedule need not be delivered to the receiver and the emitter, then the process returns to block 211 and continues as discussed herein.

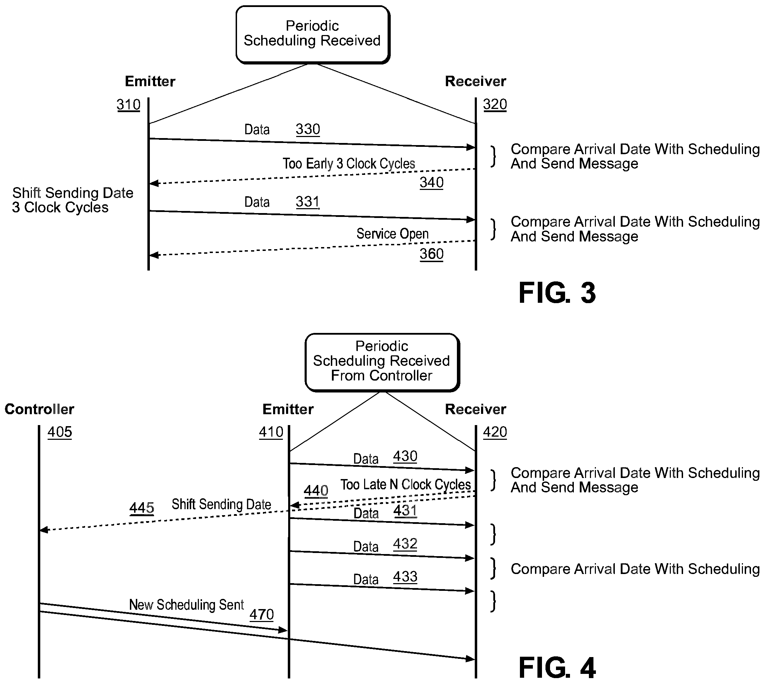

Referring next to FIG. 3, example embodiments of signal flow during an initial coordination phase of strict deterministic scheduling coordination will be discussed. The following discussion assumes that emitter 310 and the receiver 320 share a common (e.g., predefined) periodic schedule.

In example embodiments, emitter 310 sends data 330 in the form of defined or predefined frames (*i.e*., probes) according to the common schedule. The receiver 320 compares the arrival of these frames with the common schedule, and sends a control message 340 to inform the emitter 310 that these frames arrived too early or too late relative to the expected arrival date indicated by the common schedule. In this example the probe arrived three clock cycles too early.

In response to the control message 340, the emitter shifts its periodic scheduling according to the control message received from receiver 320, which in this example means that the emitter 310 will send the next probe 331 three clock cycles later than the first transmission. Sending the probe, comparing the arrival date to the scheduled arrival date, transmitting the control message, adjusting sending date of probes are repeated while the arrival of the probes do not comply with the common schedule.

In response to the receiver 320 determining that arrival of the probes complies with the common schedule, the receiver 320 signals the emitter in a second control message 360 that a strict deterministic service is now open/active for transmission of operational data, and that the initial coordination phase has been completed. In at least one example embodiment, the second control message 360 may be a different type of message that explicitly indicates that the service is open, while in other example embodiments a control message used to open the service may simply indicate that the probe arrived at the expected time, *e.g.,* zero clock cycles difference.

In at least one example embodiment, receiver 320 may also notify a central controller (not illustrated) that the service is open, *e.g.,* a deterministic-compliant link is active. In further example embodiments, the receiver may also send the controller information regarding shifts in the sending date.

Referring next to FIG. 4, example embodiments of a continuous monitoring phase of a strict deterministic scheduling coordination will be discussed. The following discussion assumes that emitter 410 and the receiver 420 share a common (e.g., predefined) periodic schedule, which in at least one example embodiment is provided by controller 405.

In example embodiments, emitter 410 sends operational data 430, for example operational frames, according to the common schedule. Receiver 420 compares the arrival of one or more of these frames with the common schedule, and sends a control message 440 to inform the emitter that the frames arrived too early or too late relative to the common schedule. Receiver 420 also informs central controller 405 in message 445. In this example, the operational data is received N clock cycles late.

The emitter 410 shifts its periodic scheduling according to the control message 440, *i.e.,* by N clock cycles, and transmits future data 431, 432, and 433 using the shifted schedule. Sending the operational data, comparing the arrival date to the scheduled arrival date, transmitting the control message, and shifting the sending date of probe as necessary are repeated while the arrival of the operational data does not match scheduled arrival times indicated by the common schedule.

In parallel, with the monitoring/transmission adjustment process, the central controller 405 determines, based on message 445 transmitted by receiver 420, whether the common schedule provided to emitter 410 and receiver 420 in the strict deterministic network needs to be reorganized because of any relative drift of clocks associated with emitter 410 and receiver 420. Central controller 405 may then send a new common schedule 470 to both emitter 410 and receiver 420.

In a particular example embodiment employing an 8b/10b 10 Gbps Ethernet link, an emitter line card (not illustrated) sends a 32 bit word at the beginning of the period designated by the common schedule for periodic scheduling. A switch line card (not illustrated) counts the number N of clock cycles (3.85 ns each) since the beginning of the period designated for periodic scheduling.

In response to a 32 bit word arriving at the switch line card, a transceiver included in the line card changes the status of the line from control (idle) to operational data, and the switch line card checks the number N of clock cycles. If this number N is null, then emitter and switch are coordinated. If this number N is not null, then the switch sends to the emitter a 32 bit word encoding the number N. In response to receiving the 32 bit word, the emitter offsets its own periodic scheduling of the number N. In at least one example embodiment, the emitter and switch are now coordinated.

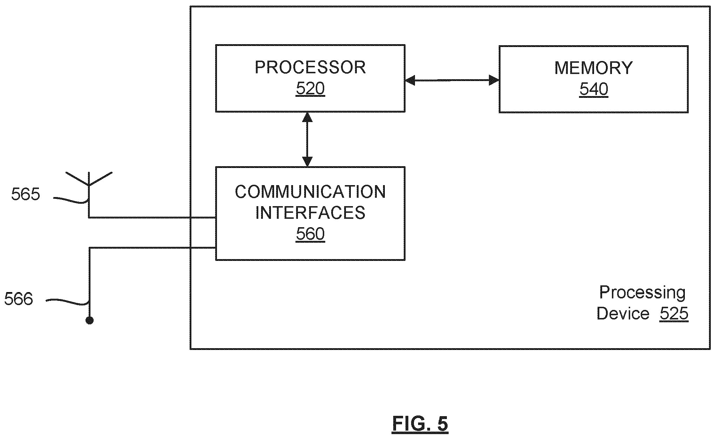

Referring next to FIG. 5, a processing device 525 configurable to implement example embodiments of an emitter, a receiver, a controller, a switch and/or other devices and equipment disclosed herein. As shown, processing device 525 includes: a memory 540; a processor 520 connected to the memory 540; various interfaces 560 connected to the processor 520; one or more (e.g., a plurality of) antennas or antenna panels 565 connected to the various interfaces 560; and one or more wired connections 566. The various interfaces 560 and the antenna 565 may constitute a transceiver for transmitting/receiving data from/to other network elements via one or more antenna beams.

In various example embodiments, interfaces 560 may include native optical switching interfaces, 1 Tbps per port packet switches, and/or the like. Some such interfaces may be used by processing device 525 to communicate via large native IP networks without requiring optical-electrical-optical (OEO) conversion. Depending on the implementation of processing device 525, the processing device 525 may include many more components than those shown in FIG. 5. However, it is not necessary that generally conventional components be shown in order to disclose the illustrative example embodiment(s).

The memory 540 may be a computer readable storage medium that generally includes a random-access memory (RAM), read only memory (ROM), and/or a permanent mass storage device, such as a disk drive. The memory 540 also stores an operating system and any other routines/modules/applications for providing the functionalities of processing device 525 to be executed by the processor 520. These software components may also be loaded from a separate computer readable storage medium into the memory 540 using a drive mechanism (not shown). Such separate computer readable storage medium may include a disc, tape, DVD/CD-ROM drive, memory card, or other like computer readable storage medium (not shown). In some example embodiments, software components may be loaded into the memory 540 via one of the various interfaces 560, rather than via a computer readable storage medium.

The processor 520 may be configured to carry out instructions of a computer program by performing the arithmetical, logical, and input/output operations of the system. Instructions may be provided to the processor 520 by the memory 540.

The various interfaces 560 may include components that interface the processor 520 with the antenna 565, or other input/output components. As will be understood, the various interfaces 560 and programs stored in the memory 540 to set forth the special purpose functionalities of the SDN controller will vary depending on the implementation of the processing device 525.

The interfaces 560 may also include one or more user input devices (e.g., a keyboard, a keypad, a mouse, or the like) and user output devices (e.g., a display, a speaker, or the like).

While one or more example embodiments may be described from the perspective of an SDN controller, it should be understood that one or more example embodiments discussed herein may be performed by one or more processors (or processing circuitry) at the applicable device. For example, according to one or more example embodiments, at least one memory may include or store computer-executable instructions which, when executed by at least one processor, cause and SDN controller or a trust manager to perform one or more operations discussed herein.

As discussed herein, the terminology "one or more" and "at least one" may be used interchangeably.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items. Similarly, the term "or" includes both its conjunctive and disjunctive meanings.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe a physical relationship between elements should be interpreted in a like fashion (e.g., "between," versus "directly between," "adjacent," versus "directly adjacent," *etc.*)*.*

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

As discussed herein, illustrative embodiments have been described with reference to acts and symbolic representations of operations (*e*.*g*., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other non-transitory, physical media capable of storing or instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory, and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (*i.e.,* open language). The term "coupled," as used herein, is defined as connected, although not necessarily directly, and not necessarily mechanically. Terminology derived from the word "indicating" (*e*.*g*., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, other network elements, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A receiver comprising:
at least one processor;
memory coupled to the at least one processor, the memory storing computer-executable instructions; and
wherein the at least one processor is configured to execute the computer-executable
instructions to cause the receiver to
receive a setup transmission from an emitter via a communications link connecting the emitter and the receiver;
determine a current variance between a scheduled receive time and a time at which the setup transmission was received; and
transmit a first control message to the emitter, wherein the first control message indicates whether the current variance is acceptable.

2. The receiver of claim 1, wherein the at least one processor is further configured to execute the computer-executable instructions to cause the receiver to:
determine that the current variance is acceptable in response to the scheduled receive time and the time at which the setup transmission was received varying by less than a threshold number of clock cycles.

3. The receiver of claim 1, wherein the at least one processor is further configured to execute the computer-executable instructions to cause the receiver to:
receive operational data from the emitter during a period when the communication link is active;
monitor an operational variance indicating a difference between a first time at which the receiver expected to receive the operational data, and a second time at which the receiver received the operational data; and
transmit a second control message to the emitter, wherein the second control message indicates a transmission offset to be applied by the emitter.

4. The receiver of claim 1, wherein:
the setup transmission includes a probe transmitted in accordance with a communication schedule shared by the emitter and the receiver.

5. The receiver of claim 1, wherein the at least one processor is further configured to execute the computer-executable instructions to cause the receiver to:
generate a dedicated control message including variance information.

6. The receiver of claim 1, wherein the at least one processor is further configured to execute the computer-executable instructions to cause the receiver to:
insert variance information into a non-dedicated signal.

7. The receiver of claim 1, further comprising:
an optical line card configured to communicate with the emitter via an optical communications link.

8. An emitter comprising:
at least one processor;
memory coupled to the at least one processor, the memory storing computer-executable instructions; and
wherein the at least one processor is configured to execute the computer-executable
instructions to cause the emitter to
determine a first transmission offset,
apply the first transmission offset to operational data transmitted from the emitter to a receiver via a communications link connecting the emitter and the receiver; and
receive an adjustment control message from the receiver, the adjustment control message indicating a current variance between a first time at which the receiver expected to receive data transmitted by the emitter and a second time at which the receiver received the data transmitted by the emitter; and
apply a first adjusted transmission offset, determined based on the adjustment control message, to subsequently transmitted operational data.

9. The emitter of claim 8, wherein the at least one processor is further configured to execute the computer-executable instructions to cause the emitter to iteratively perform the following until a message is received from the receiver indicating that the communications link is ready for transmission of operational data:
transmit a setup probe to the receiver via the communications link;
receive a setup control message from the receiver indicating a setup variance between a third time at which the receiver expected to receive the setup probe, and a fourth time at which the receiver received the setup probe; and
adjust the first transmission offset based on the setup variance.

10. The emitter of claim 9, wherein:
the setup probe is transmitted in accordance with a communication schedule shared by the emitter and the receiver.

11. The emitter of claim 8, wherein the at least one processor is configured to execute the computer-executable instructions to cause the emitter to:
generate the first adjusted transmission offset by updating the first transmission offset by a number of clock cycles indicated by the adjustment control message.

12. The emitter of claim 8, wherein:
the adjustment control message includes one of a dedicated signal generated to transfer variance information, or a non-dedicated signal including the variance information.

13. The emitter of claim 8, further comprising:
an optical line card configured to communicate with the receiver via an optical communications link.

14. A communication system comprising:
a controller including a processor and a memory storing computer-executable
instructions, wherein the controller is configured to be coupled to an emitter and a receiver, and wherein the processor is configured to execute the computer-executable instructions to cause the controller to
transmit a communication schedule to the emitter and the receiver, wherein the communication schedule designates periods for communication between the emitter and the receiver via a deterministic-compliant communications link;
receive, from the receiver, information indicating an operational variance between a first time at which a frame transmitted by the emitter arrived at the receiver, and a second time at which the frame transmitted by the emitter was schedule to arrive at the receiver; and
transmit an updated communication schedule to the emitter and the receiver.

15. The communication system of claim 14, wherein:
the updated communication schedule is based on the information indicating the operational variance.
